# EUROPÄISCHE PATENTANMELDUNG

(11) **EP 2 257 114 A1**
(43) Veröffentlichungstag der Anmeldung: **01.12.2010**
(21) Anmeldenummer: 09161516.1
(22) Anmeldetag: 29.05.2009
(51) Int. Cl.: H04W 74/02, H04W 74/04, H04W 74/08, H04W 84/18

(54) **Verfahren zur Zuordnung der Datentelegramme zu den Zeitschlitzen in einem drahtlosen Datenbussystem mit versteckten Teilnehmern ("Hidden Nodes")**

(71) Anmelder: Siemens Aktiengesellschaft, 80333 München (DE)
(72) Erfinder: Lahner, Frank, 91052, Erlangen (DE); Thamm, Peter, 69469, Weinheim (DE)

(57) **Zusammenfassung**

Dabei ist jedem Teilnehmer pro Übertragungszyklus zunächst zumindest ein Zeitschlitz zur ausschließlichen Nutzung zugeordnet. Dieser Zeitschlitz kann im Falle einer Nichtnutzung durch den Teilnehmer von einem anderen Teilnehmer zur Benutzung belegt werden. Weiterhin ist erfindungsgemäß eine Belegungsmatrix vorhanden, in der für jeden Teilnehmer verzeichnet ist, für welche Zeitschlitze von anderen Teilnehmern eine Belegung in einem Datentelegrammzyklus zugelassen ist. Erfindungsgemäß ist die Belegungsmatrix so gebildet, dass darin für einen Teilnehmer zumindest die Belegung des Zeitschlitzes eines anderen Teilnehmers gesperrt ist, wenn es sich dabei um einen für diesen funktechnisch nicht erreichbaren anderen Teilnehmer ("Hidden Node") handelt.

## Beschreibung

Die Erfindung betrifft ein Verfahren zur Zuordnung von Teilnehmern eines drahtlosen Datenbusnetzwerks zu den Zeitschlitzen in den Übertragungszyklen der Datentelegramme des Datenbusnetzwerks.

Bei drahtlosen Datenbusnetzwerken werden unterschiedliche Verfahren eingesetzt, um den Zugriff der einzelnen Kommunikationsteilnehmer auf die während der Datenübertragungszyklen zur Verfügung stehenden Zeitschlitze zu regeln. Bei drahtlosen Datenbusnetzwerken wird dabei eine möglichst kollisionsfreie Belegung der Zeitschlitze mit Datentelegrammen der einzelnen Kommunikationsteilnehmer angestrebt. Grundsätzlich werden zur Organisation des Telegrammverkehrs zwei Typen von Zugriffsverfahren unterschieden.

Bei einem ersten Typ wird jedem Kommunikationsteilnehmer ein exklusives Zugriffsrecht auf einen Kanal oder Zeitschlitz gewährt. Die in den Datenübertragungszyklen zur Verfügung stehenden Zeitschlitze werden also jeweils einem bestimmten Teilnehmer fest zugeordnet. Diese Zugriffsverfahren werden auch Zeitmultiplexverfahren oder "TDMA Time Division Multiple Access" genannt. Auf Grund des dabei gewährten exklusiven Zugriffs eines jeden Kommunikationsteilnehmers auf seinen eigenen Zeitschlitz ist gewährleistet, dass es zu keinen gleichzeitigen Übertragungen verschiedener Teilnehmer und damit zu keinen Zugriffskonflikten und Telegrammzerstörungen kommt. Dies ist auch dann gewährleistet, wenn bei einem drahtlosen Datenbusnetzwerk Kommunikationsteilnehmer vorhanden sind, bei denen auf Grund der topologischen Struktur des Netzwerkes oder wegen vorübergehender Abschattungen keine Funkverbindung untereinander besteht. Derartige Paare an funktechnisch "versteckten" Teilnehmern, die sich gegenseitig nicht "hören" können werden auch als "Hidden Nodes" bezeichnet. Solche Teilnehmer können zwar jeweils Datentelegramme an einen dritten Teilnehmer senden, z.B. an ein zentrales Gateway, können aber die Sendeaktivitäten anderer "Hidden Node" nicht beobachten.

Zugriffsverfahren auf dem TDMA Prinzip verfügen vorteilhaft neben der absoluten Kollisionsfreiheit über eine deterministische Zykluszeit, d.h. es gibt eine maximale Latenzzeit bei der Übertragung einer Nachricht. Dem steht der Nachteil gegenüber, dass die durchschnittliche Latenzzeit auf den maximal möglichen Datenverkehr ausgelegt ist und somit auch bei einem vorübergehend schwachen Datenverkehr nicht reduziert werden kann.

Bei einem zweiten Typ von Zugriffsverfahren können die Kommunikationsteilnehmer grundsätzlich alle auf einen Kanal oder die in den Datenübertragungszyklen zur Verfügung stehenden Zeitschlitze gleichzeitig zugreifen und versuchen, darin Datentelegramme zu übertragen. Diese Zugriffsverfahren werden auch "CSMA Carrier Sense Multiple Access" bzw. "CSMA/CA Carrier Sense Multiple Access with Collision Avoidance" genannt. Zur Vermeidung von Kollisionen hören Teilnehmer, die gleichzeitig auf einen Kanal bzw. Zeitschlitz zugreifen möchten, zunächst den aktuellen Zeitschlitz für eine kurze Wartezeit ab um sicherzustellen, dass dieser nicht in der Zwischenzeit von einem anderen Teilnehmer zur Übertragung eines Datentelegramms belegt ist. Kann am Ende der Wartezeit keine Funkübertragung durch einen anderen Teilnehmer festgestellt werden, so geht der "hörende" Teilnehmer davon aus, dass der Zeitschlitz frei ist und belegt diesen durch Übertragung eigener Daten.

Trotz dieser Maßnahme können Kollisionen nicht vollständig ausgeschlossen werden, auch wenn die Wahrscheinlichkeit dafür relativ gering ist, da ein solcher Fall nur dann auftritt, wenn zwei Kommunikationsteilnehmer tatsächlich zeitgleich mit dem Senden beginnen. Die dabei auftretenden Telegrammzerstörungen werden von den Sendern durch fehlende Quittungen des Kommunikationsempfängers, z.B. einem Netzwerkkoordinator in Form eines Gateways, erkannt. Auf Grund der Notwendigkeit, die fehlgeschlagene Übertragung der Telegramme zu wiederholen, treten aber große Zeitverzögerungen auf.

Vorteil dieser Verfahren ist, dass im Falle einer geringen Last in einem drahtlosen Kommunikationsnetz die Latenzzeiten sehr kurz sind. Nachteil ist, dass bei hoher Kanallast die Latenzzeiten aufgrund der Wiederholungen von Telegrammen sehr groß werden können und keine maximale Latenzzeit bestimmt werden kann. Verschärft wird dieses Problem, wenn in einem derart betriebenen Datenübertragungsnetz "Hidden Nodes" existieren, also zumindest ein Paar an Teilnehmern vorhanden ist, welche sich im Falle der Übertragung einer Nachricht an einen dritten Teilnehmer gegenseitig nicht hören können. Bei derartigen Teilnehmern entstehen Kollisionen nicht nur in dem seltenen Fall gleichzeitigen Telegrammstarts. Vielmehr können diese jederzeit die Übertragung des anderen Teilnehmers stören, da diese sich gegenseitig nicht "hören". Hierdurch wird die Häufigkeit größerer Latenzzeiten wesentlich erhöht.

Bei drahtlosen Datenbusnetzwerken auf Funkbasis, welche zur industriellen Kommunikation eingesetzt werden, muss die Datenübertragung den Anforderungen von Determinismus und Echtzeitfähigkeit genügen. Die Datenübertragung muss also so rechtzeitig abgeschlossen sein, dass diese prozesskompatibel ist, der Ablauf eines technischen Prozesses davon also nicht gestört wird. Weiterhin müssen die maximal auftretenden Zykluszeiten berechnet werden können und möglichst klein sein. Schließlich sollen Latenzzeiten sollen möglichst klein sein, und Telegramme über verschiedene Kommunikationspfade möglichst verzögerungsfrei transportiert werden.

Zur Erfüllung von Anforderungen dieser Art werden häufig Zugriffsverfahren eingesetzt, die eine Kombination von TDMA und CSMA Verfahren darstellen. Damit können die Vorteile von TDMA Verfahren, bevorzugt deren Deterministik, und von CSMA Verfahren, bevorzugt die kurzen mittleren Latenzzeiten, vereint werden. Verfahren dieser Art sind z.B. in IEEE 802.15.4 spezifiziert. Kombinierte Zugriffsverfahren erzeugen nur geringen Kommunikationsmehraufwand und können in der Automatisierungs- und Prozesstechnik vorteilhaft bei "energieautarken Sensoren" verwendet werden, also bei energiesparenden Sensoren z.B. mit lokaler Energieversorgung über eine Batterie. Diese Verfahren können auch so konfiguriert werden, dass eine dynamische Anpassung an veränderliche Verbindungen bei dem betroffenen drahtlosen Datenbusnetzwerken möglich ist, z.B. eine Anpassung an ortsbewegliche Teilnehmer, veränderliche Kanaleigenschaften wie z.B. Abschattung, Verstärkung.

Ein derartiges kombiniertes Zugriffsverfahren ist dadurch gekennzeichnet, dass für die in einem Datenübertragungszyklus zur Verfügung stehenden Zeitschlitze zwar festgelegt ist, welche Teilnehmer über die jeweiligen Zeitschlitze verfügen können, also welche Teilnehmer in welchen Zeitschlitzen exklusiv Daten übertragen dürfen. Dabei müssen nicht zwingend alle Zeitschlitze eines Zyklus zugeordnet sein, d.h. es können darüber hinaus noch freie Zeitschlitze vorhanden sein. Falls allerdings einer der Teilnehmer sein Recht zu einer Datenübertragung im zugeordneten Zeitschlitz eines Datenübertragungszyklus nicht in Anspruch nimmt, da z.B. keine Daten zur Übertragung vorliegen, können andere Kommunikationsteilnehmer dynamisch wechselnd diesen Zeitschlitz konkurrierend belegen.

Mit einem kombinierten Zugriffsverfahren der obigen Art ist es sowohl möglich, die maximale Latenzzeit eines deterministischen Systems zu realisieren, also auch bei nicht hundertprozentiger Belastung die mittlere Latenzzeit zu reduzieren. Wenn jedoch in einem solchen Netz "Hidden Nodes" existieren, kann der Vorteil der reduzierten mittleren Latenzzeit wieder verloren gehen, falls zwei Teilnehmer einen vom exklusiven Benutzer nicht in Anspruch genommenen Zeitschlitz versuchen gleichzeitig zu belegen und somit eine Kollision verursachen. Besonders problematisch ist es bei einem solchen Verfahren, dass weder die beiden sich nicht hörenden Sender noch der Empfänger weiß, welche Teilnehmer "Hidden" sind. Es kann sogar passieren, dass der Sender bei der Benutzung seines exklusiven Zeitschlitzes durch einen "Hidden Node" gestört wird.

Der Erfindung liegt die Aufgabe zu Grunde ein drahtloses Datenbusnetzwerk, welches eine kombinierte Zuordnung von Teilnehmern zu Zeitschlitzen eines Zyklus sowohl nach dem TDMA Verfahren, d.h. eine deterministische Kommunikation, als auch nach dem CSMA Verfahren, d.h. eine schnelle ereignisgesteuerte Kommunikation, ermöglicht so weiterzubilden, dass auch bei Vorhandensein von "Hidden Nodes" Zugriffskonflikte und damit Fehlübertragungen vermieden werden können.

Die Aufgabe wird durch das im Anspruch 1 angegebene Verfahren gelöst. Vorteilhafte weitere Ausführungsformen der Erfindung sind in den Unteransprüchen angegeben.

Erfindungsgemäß wird pro Übertragungszyklus der Zugriff auf die Zeitschlitze durch die Teilnehmer in einem drahtlosen Datenbusnetzwerk unter zu Hilfenahme einer Belegungsmatrix koordiniert. Mit deren Hilfe wird Teilnehmern, welche wechselseitig funktechnisch nicht erreichbar sind, also "Hidden Nodes" darstellen und somit eine Belegung des Zeitschlitzes des jeweils anderen Teilnehmers nicht erkennen können, wechselseitig jeweils ein Zugriff auf die dem anderen Teilnehmer zur ausschließlichen Nutzung zugeordnete Zeitscheibe verwehrt. Damit können statistisch häufiger auftretende Kollisionen vermieden werden welche dadurch entstehen, dass ein Teilnehmer auf Grund einer funktechnischen Kontaktunterbrechung nicht detektieren kann, dass ein Teilnehmer Daten in dem exklusiv zugeordneten Zeitschlitz sendet und stattdessen versehentlich annimmt, dass der Zeitschlitz durch Nichtbenutzung frei geworden ist.

Bei einer weiteren Ausbildung der Erfindung werden zusätzlich bei solchen Teilnehmern die in der Belegungsmatrix noch freien Zeitschlitzen, welche also weder zur ausschließlichen Nutzung zugeordnet noch gesperrt sind, ohne Überlappungen auf die beiden Teilnehmer eindeutig verteilt. Damit können auch statistisch seltener auftretende Kollisionen vermieden werden, bei denen zwei untereinander funktechnisch nicht erreichbare Teilnehmer gleichzeitig versuchen, den durch Nichtbenutzung frei gewordenen Zeitschlitz eines anderen Teilnehmers zu belegen.

Vorteilhaft wird das erfindungsgemäße Verfahren durch eine zentrale Netzwerkschnittstelle ausgeführt, z.B. durch einen Gateway, der für alle Teilnehmer funktechnisch erreichbar ist, also keine "Hidden Node" darstellt. Diese zentrale Netzwerkschnittstelle verwaltet und gegebenenfalls aktualisiert automatisch zu festgelegten Zeiten die erfindungsgemäße Belegungsmatrix, und organisiert damit die kollisionsfreie Zuteilung der Zeitschlitze an die Kommunikationsteilnehmer für jeden Telegrammzyklus. Hiermit ist die Struktur eines jeden Telegrammzyklus, auch Zeitscheibenzyklus genannt, kollisionsfrei definiert. In der Belegungsmatrix ist einerseits verzeichnet, welchen Teilnehmern welcher Zeitschlitz zur ausschließlichen Benutzung fest zugeordnet ist und andererseits welche Teilnehmer untereinander funktechnisch nicht erreichbar sind, sich also nicht "hören" können und durch entsprechende Zugriffssperren auf die Zeitschlitze des "unsichtbaren" Partners wechselseitig voneinander entkoppelt werden müssen. Der für jeden Teilnehmer in einem Datenbusnetzwerk relevante Teil der Belegungsmatrix wird vom Netzwerkkoordinator an alle Teilnehmer übertragen. Diese können daraus im Falle eines freien oder frei gewordenen Zeitschlitzes entnehmen, ob sie über eine Berechtigung zur Belegung dieses Zeitschlitzes verfügen oder nicht.

Die Erfindung bietet den Vorteil, dass in einem Datenbusnetzwerk mit einer Kombination aus TDMA und CSMA/CA Zugriffsverfahren die Latenzzeiten bei der Versendung von Datentelegrammen deutlich reduziert werden können.

Zur Bildung und gegebenenfalls Aktualisierung der Belegungsmatrix stehen unterschiedliche Vorgehensweisen zur Verfügung.

So wird bei einer ersten Ausführungsform, z.B. von einer zentralen Netzwerkschnittstelle, zum einen eine spezielle Sendeaufforderung an einen ausgewählten Teilnehmer versandt, worin der Teilnehmer aufgefordert wird, testweise ein Datentelegramm in einer bestimmten Zeitscheibe zu senden, insbesondere in der dem Teilnehmer zur ausschließlichen Nutzung zugeordneten Zeitscheibe. Zum anderen werden alle anderen Teilnehmer im drahtlosen Datenbussystem aufgefordert zu versuchen, das in dieser Zeitscheibe übertragene Datentelegramm zu empfangen. Falls einer der anderen Teilnehmer in dieser Zeitscheibe kein Datentelegramm empfangen kann, dann sind beide Teilnehmer füreinander funktechnisch nicht erreichbar, d.h. es liegt zwischen dem ausgewählten und dem nicht empfangenden Teilnehmer eine "Hidden Nodes" Konstellation vor. Der nicht empfangende Teilnehmer generiert dann ein Datentelegramm mit einem entsprechenden Hinweis und versendet dieses in dem ihm exklusiv zugeordneten Zeitschlitz an die zentrale Netzwerkschnittstelle. Das auf diese Weise automatisch detektierte Paar an funktechnisch untereinander nicht erreichbaren Teilnehmern ("Hidden Nodes") wird dann in der oben beschriebenen Weise gemäß der Erfindung in der Belegungsmatrix verzeichnet. Selbstverständlich kann dieser Verfahrensschritt auch mit anderen Teilnehmern durchgeführt werden, um gegebenenfalls weitere funktechnisch untereinander nicht erreichbare Teilnehmer aufzudecken.

Diese Ausführungsform des Verfahrens kann vorteilhaft bei einem Systemanlauf durchgeführt werden und hat den Vorteil, dass eine Vielzahl von "Hidden Nodes" bereits vor der eigentlichen Inbetriebnahme eines Datenbusnetzwerkes identifiziert und mögliche Kollisionen von vorne herein vermieden werden können. Es kann aber auch während des Produktivbetriebes durchgeführt bzw. wiederholt werden, um die Belegungsmatrix auf diese Weise u.U. regelmäßig zu aktualisieren. Gegebenenfalls kann die Belegungsmatrix vor einer Aktualisierung auch zurückgesetzt werden. Damit kann vermieden werden, dass nach dem Auftreten von nur temporären Funkunterbrechungen dauerhaft Paare von quasi virtuellen "Hidden Stations" in der Belegungsmatrix verzeichnet sind. Es könnte dabei sogar der Falle eintreten, dass nach einer gewissen Zeit die Belegungsmatrix keine ungesperrten Kombinationen von Teilnehmern mehr aufweist. Eine Belegung von nicht genutzten Zeitschlitzen durch andere Teilnehmer nach dem CSMA/CA Zugriffsverfahren wäre dann dauerhaft nicht mehr zugelassen und der Vorteil der Kombination von TDMA und CSMA Zugriffsverfahren verloren gegangen.

Bei einer anderen Ausführung kann die Detektion von funktechnisch nicht erreichbaren Teilnehmern ("Hidden Nodes") und damit die erfindungsgemäße Befüllung der Belegungsmatrix auch im laufenden Betrieb eines Datenbusnetzwerks durch dynamisches Erkennen und Analysieren von Kollisionen erfolgen. Falls die Übertragung des Datentelegramms eines Teilnehmers in einem Zeitschlitz gestört wurde, so kann dieser Teilnehmer dies an dem Ausbleiben einer die fehlerfreie Quittierung der Übertragung signalisierenden Rückmeldung insbesondere der zentralen Netzwerkschnittstelle erkennen. In dem folgenden Datentelegramm, welches von diesem Teilnehmer vorzugsweise in dem nächsten, zur ausschließlichen Nutzung zugeordneten Zeitschlitz übertragen wird, wird dann zusätzlich die Nummer des Zeitschlitzes übertragen, in dem die Fehlübertragung stattgefunden hat. Es ist damit der Teilnehmer bekannt, dem dieser Zeitschlitz exklusiv zugeordnet ist. Der sendende Teilnehmer und der Inhaber der betroffenen Zeitscheibe sind dann "Hidden Stations". Je nach Auftreten von Kollisionsfällen kann damit stückweise die Belegungsmatrix in der oben beschriebenen, erfindungsgemäßen Weise konfiguriert werden. Diese Ausführung hat gegenüber der rein zeitgesteuerten Ausführung den Vorteil, dass die Belegungsmatrix bei Auftritt einer Kollision sofort um die verursachende "Hidden Node" Konstellation ergänzt werden kann, wobei allerdings der Wegfall einer Kollision wiederum nicht sofort detektiert wird. Deshalb können beide Verfahren auch kombiniert angewendet werden.

Das erfindungsgemäße Verfahren ist besonders dann von Vorteil, wenn in dem drahtlosen Datenbusnetzwerk nicht ortsfeste Teilnehmer vorhanden sind oder wenn Bewegungen in der Nachbarschaft von Teilnehmern erfolgen, etwa wenn große Gegenstände z.B. auf Förderbändern transportiert werden. In solchen Fällen können dynamisch "Hidden Node" Konstellationen zwischen Teilnehmern entstehen und mit Hilfe des erfindungsgemäßen Verfahrens quasi kompensiert werden. Falls in einem solchen Fall die Umgebung, in der das drahtlose Datenbusnetzwerk eingesetzt ist, unterschiedliche Zustände einnimmt, so ist es auch möglich, mehrere spezielle darauf optimierte Belegungsmatrizen zu führen, diese je nach Zustand der Anlage zu aktivieren. Besonders vorteilhaft ist der Einsatz des erfindungsgemäßen Verfahrens auch bei Datenbusnetzwerken, bei denen häufiger ein nur geringer Durchsatz an Datentelegrammen auftritt (geringe Kanallast), so dass häufiger exklusiv zugeordnete Zeitschlitze von den jeweiligen Teilnehmern freigegeben und somit von anderen Teilnehmern belegt werden können. Weiterhin ist das erfindungsgemäße Verfahren auch vorteilhaft bei Datenbusnetzwerken einsetzbar, welche eine größere Anzahl von Teilnehmern aufweisen. Da hierbei die Anzahl der Zeitschlitze pro Übertragungszyklus und damit die Zykluszeiten ohne hin groß sind, ist es vorteilhaft, mit Hilfe des erfindungsgemäßen Verfahrens Zerstörungen von Datentelegrammen durch Kollisionen funktechnisch nicht erreichbarer Teilnehmer möglichst zu vermeiden.

Die Erfindung und vorteilhafte Ausführungen derselben werden an Beispielen erläutert, welche in den nachfolgend kurz angegebenen Figuren dargestellt sind. Dabei zeigt
- Fig. 1: einen Ausschnitt aus beispielhaft zwei Datenübertra- gungszyklen, wobei deren Zeitschlitz den Teilnehmern A - F zur ausschließlichen Nutzung zugeordnet sind,
- Fig. 2: das Beispiel einer Zugriffskollision auf Zeitschlit- ze eines Übertragungszyklus, wobei ein Teilnehmer versehentlich gleichzeitig auf den zur ausschließli-
- Fig. 3: chen Nutzung zugewiesenen Zeitschlitz eines anderen Teilnehmers zugreift, ein mit Fig. 2 vergleichbares Beispiel, wobei mit Hilfe des erfindungsgemäßen Verfahrens eine Kollisi- on vermieden wurde,
- Fig. 4: das Beispiel einer weiteren Zugriffskollision, wobei zwei Teilnehmer versehentlich gleichzeitig auf einen frei gewordenen Zeitschlitz eines anderen Teilneh- mers zugreifen,
- Fig. 5: ein mit Fig. 4 vergleichbares Beispiel, wobei mit Hilfe des erfindungsgemäßen Verfahrens eine Kollisi- on vermieden wurde,
- Fig. 6: das Beispiel einer Belegungsmatrix für eine der Fig. 5 entsprechende Telegrammstruktur, wobei angenommen ist, dass sich die Teilnehmer B und E untereinander funktechnisch nicht erreichen,
- Fig. 7: ein beispielhafter weiterer Übertragungszyklus, wo- bei auch im Falle von zwei Paaren funktechnisch un- tereinander unerreichbarer Teilnehmer mit Hilfe der Erfindung Kollisionen vermieden werden können, und
- Fig. 8: das Beispiel einer Belegungsmatrix für eine der Fig. 7 entsprechende Telegrammstruktur, wobei angenommen ist, dass sich die Teilnehmer B, E und A, C unter- einander funktechnisch nicht erreichen.

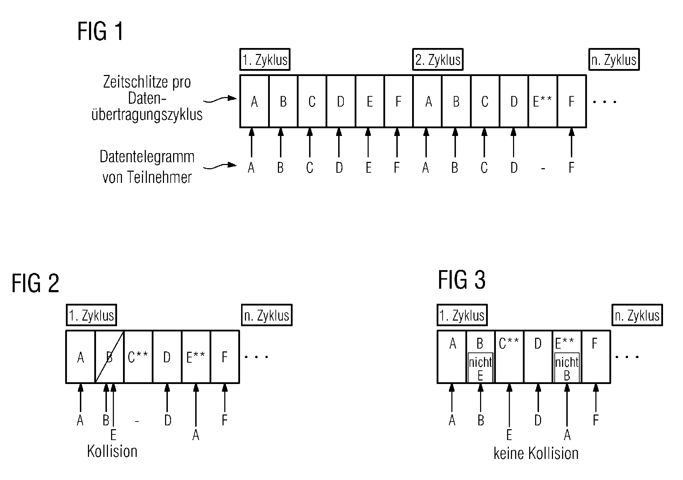

Fig. 1 zeigt einen Ausschnitt aus einer Datenübertragung mit beispielhaft zwei Datenübertragungszyklen. Die Übertragung von Daten in einem drahtlosen Datenbusnetzwerk stellt natürlich eine endlose Kette solcher Datenübertragungszyklen dar. Dies ist in Fig. 1 und den folgenden Figuren neben einem beispielhaften 1. und 2. Zyklus durch einen n. Zyklus symbolisiert.

Im Beispiel der Fig. 1 sei angenommen, dass in dem zu Grunde liegenden Datenbusnetzwerk neben einer Zentralstation sechs Teilnehmer A - F vorhanden sind und jedem der Teilnehmer A - F exakt ein Zeitschlitz A - F zur ausschließlichen Nutzung zugeordnet ist. Dabei werden im 1. Zyklus von jedem Teilnehmer A - F Nutzdaten in dem exklusiv zugeordneten Zeitschlitz A - F übertragen, während im 2. Zyklus beispielhaft der Zeitschlitz E ungenutzt ist, da beim Teilnehmer E aktuell keine zu übertragenden Daten vorliegen. Bei diesem TDMA Zugriffsverfahren sind zwar Zugriffskollisionen von Teilnehmern in jedem Falle ausgeschlossen. Nachteilig ist jedoch, dass temporär frei gewordene Zeitschlitze ungenutzt bleiben, wie z.B. der Zeitschlitz E im 2. Zyklus von Fig. 1.

Fig. 2 zeigt das Beispiel einer Zugriffskollision auf Zeitschlitze eines Übertragungszyklus, wobei ein Teilnehmer versehentlich gleichzeitig auf den zur ausschließlichen Nutzung zugewiesenen Zeitschlitz eines anderen Teilnehmers zugreift. Dabei sei angenommen, dass zwischen den Teilnehmern B und E eine "Hidden Node" Konstellation vorliegt und die Zeitschlitze C und E von den exklusiv zugeordneten Teilnehmern freigegeben wurden. Da im Gegensatz zum Beispiel von Fig. 1 bei der Datenübertragung im Beispiel von Fig. 2 ein kombiniertes TDMA und CSMA Zugriffsverfahren eingesetzt wird, können Zugriffskollisionen zunächst nicht ausgeschlossen werden. Dies hat im Beispiel der Fig. 2 zur Folge, dass der Teilnehmer E fehlerhaft versucht im Zeitschlitz B zu senden, ohne dabei zu bemerken, dass der diesem Zeitschlitz exklusiv zugeordnete Teilnehmer B den Zeitschlitz nicht frei gegeben hat und ebenfalls Daten übertragen möchte. Dagegen kann der gegenüber allen anderen Teilnehmern funktechnisch sichtbare Teilnehmer A zusätzlich, kollisionsfrei einen frei gewordenen Zeitschlitz zur weiteren Datenübertragung belegen, im Beispiel der Zeitschlitz E**.

Derartige Kollisionen können mit Hilfe des erfindungsgemäßen Verfahrens vermieden werden. Dies wird an Hand von Fig. 3 erläutert, die ein mit Fig. 2 vergleichbares Beispiel zeigt. Auch dabei liegt zwischen den Teilnehmern B und E eine "Hidden Node" Konstellation vor und die Zeitschlitze C und E wurden von den exklusiv zugeordneten Teilnehmern freigegeben. Auf Grund des erfindungsgemäßen Verfahrens sind allerdings die "Hidden Node" Partner der Teilnehmer B, E bekannt und entsprechend in der Belegungsmatrix verzeichnet. Da der Zeitschlitz B somit mit "nicht E" markiert ist, wird die Belegung durch den fest geordneten Teilnehmer B nicht gestört. Stattdessen belegt der suchende Teilnehmer E kollisionsfrei den nächsten freien Zeitschlitz C**. Weiterhin ändert sich an der Belegung des freien Zeitschlitzes E** durch A nichts. Mit Hilfe des erfindungsgemäßen Verfahrens können also häufig vorkommende Zugriffskonflikte der oben beschriebenen Art vermieden werden.

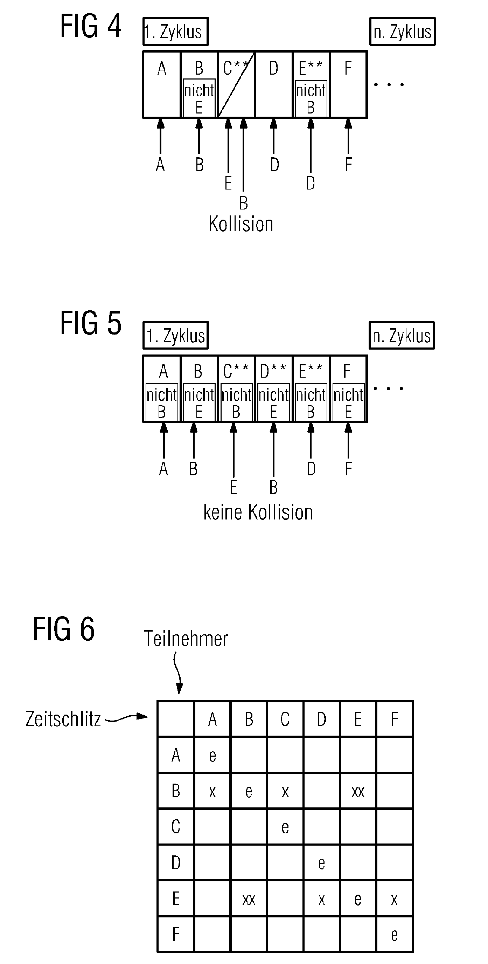

Dennoch gibt es selten vorkommende Ausnahmesituationen, bei denen eine weitere Art eines Zugriffskonflikts auftreten kann. Fig. 4 zeigt im Beispiel eine entsprechende Zugriffskollision. Auch dabei wird angenommen, dass zwischen den Teilnehmern B und E eine "Hidden Node" Konstellation vorliegt und die Zeitschlitze C und E von den exklusiv zugeordneten Teilnehmern freigegeben wurden. Weiterhin wurde angenommen, dass bei beiden "Hidden Nodes" B, E ein erhöhtes Datenübertragungsaufkommen vorliegt, so dass beide quasi auf der Suche nach dem nächsten freien Zeitschlitz sind. Da diese aber sich funktechnisch wechselseitig nicht erreichen können, versuchen nun beide gleichzeitig unter Verursachung einer Kollision auf den frei gewordenen Zeitschlitz C** des Teilnehmers C zuzugreifen. Demgegenüber verläuft die Belegung des freien Zeitschlitzes E** durch den Teilnehmer D problemlos. Obwohl dieser mit "nicht B" markiert ist, kann er von D belegt werden, da zwischen E und D im Beispiel keine "Hidden Node" Konstellation vorliegt.

Mit Hilfe einer vorteilhaften Weiterbildung des erfindungsgemäßen Verfahrens kann auch diese Art einer Zugriffskollision vermieden werden. Dies wird an Hand der weiterführenden Fig. 5 erläutert, die ein mit Fig. 4 vergleichbares Beispiel zeigt. Dabei sind auch diejenigen Zeitschlitze, welche in Fig. 4 noch nicht mit "Sperrvermerken" versehen sind entsprechend gekennzeichnet. Dabei findet quasi eine eindeutige Aufteilung dieser Zeitschlitze auf die beiden "Hidden Node" Teilnehmer statt. So sind im Beispiel nun auch die Zeitschlitze A, C** mit "nicht B" markiert, können also bei Bedarf vom Teilnehmer E belegt werden. Entsprechend sind im Beispiel nun auch die Zeitschlitze D und F mit "nicht E" markiert, können also bei Bedarf vom Teilnehmer B belegt werden. Auf Grund dieser zusätzlichen Aufteilung können auch Kollisionen in der Art von Fig. 4 vermieden werden. Der in Fig. 4 noch kollidierende gemeinsame Zugriffsversuch der Teilnehmer E und B auf den frei gewordenen Zeitschlitz C** teilt sich in Fig. 5 auf in einen geordneten Zugriff des Teilnehmers E auf den frei gewordenen Zeitschlitz C** ("nicht B") und einen Zugriff des Teilnehmers B auf den frei gewordenen Zeitschlitz D** ("nicht E").

Fig. 6 zeigt das Beispiel einer Belegungsmatrix für eine der Fig. 5 entsprechende Telegrammstruktur, wobei angenommen ist, dass sich die Teilnehmer B und E untereinander funktechnisch nicht erreichen. In dieser sind die Zeilen den Teilnehmern A - F und die Spalten den vorhandenen Zeitschlitzen A - B zugeordnet. Weiterhin macht die Markierung "e" in der Diagonalen der Belegungsmatrix deutlich, dass natürlich z.B. dem Teilnehmer A sein "eigener" Zeitschlitz A fest und zur prioren Datenübertragung zugewiesen ist. Weiterhin symbolisieren Felder mit "xx" Zugriffssperren im Falle einer "Hidden Node" Konstellation und entsprechen damit den Markierungen in Beispiel der Fig. 3. So darf der Zeitschlitz B in der zweiten Spalte der Belegungsmatrix in Fig. 6 nicht vom Teilnehmer E gemäß der fünften Zeile belegt werden. Umgekehrt darf der Zeitschlitz E in der fünften Spalte der Belegungsmatrix nicht vom Teilnehmer B gemäß der zweiten Zeile belegt werden. Auf diese Weise können Zugriffskonflikte gemäß der im Beispiel der Fig. 2 dargestellten Art vermieden werden.

Weiterhin sind in der Belegungsmatrix auf die beiden Teilnehmer B, E gemäß den Zeilen zwei und fünf die weiteren Zeitschlitze aufgeteilt. Dies wird durch entsprechende Belegungssperren "x" symbolisiert. So sind in der zweiten Zeile für den Teilnehmer B zusätzlich die Zeitschlitze A, C, und entsprechend in der fünften Zeile für den Teilnehmer E zusätzlich die Zeitschlitze D und F blockiert. Hiermit können Kollisionen gemäß dem Beispiel von Fig. 4 vermieden werden, und entsprechen den Markierungen von Fig. 5.

Das erfindungsgemäße Verfahren ist auch dann anwendbar, wenn für einen kommunikationsaktiven Teilnehmer mehr als ein Zeitschlitz fest zugeordnet ist, bzw. grundsätzlich nicht zugeordnete, freie Zeitschlitze pro Übertragungszyklus vorhanden sind. Vorteilhaft wird die Belegungsmatrix von einem zentralen Element in einem Datenbusnetzwerk verwaltet, z.B. von einem von allen Teilnehmern funktechnisch erreichbaren Gateway.

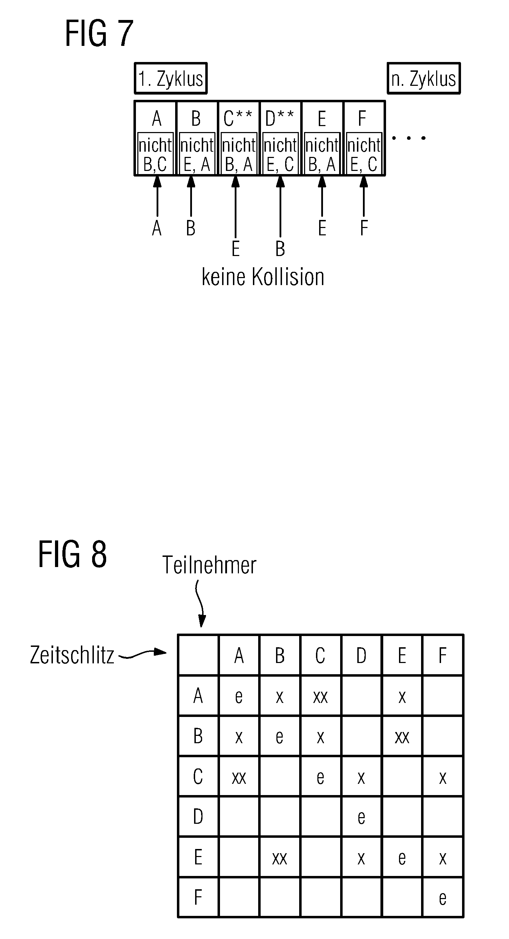

Das erfindungsgemäße Verfahren ist selbst dann anwendbar, wenn in einem drahtlosen Datenbusnetzwerk mehr als ein Paar an untereinander funktechnisch nicht erreichbaren Teilnehmern vorhanden sein sollte. Fig. 7 zeigt beispielhaft einen entsprechenden Übertragungszyklus, wobei auch im Falle von zwei Paaren funktechnisch untereinander unerreichbarer Teilnehmer mit Hilfe der Erfindung Kollisionen vermieden werden können. Dabei sei angenommenen, dass zwischen den Teilnehmern B, E und A, C jeweils eine "Hidden Node" Konstellation vorliegt. Fig. 8 zeigt das Beispiel einer entsprechenden Belegungsmatrix für die der Fig. 7 entsprechende Telegrammstruktur. Diese ist grundsätzlich nach dem gleichen Schema wie oben bereits erläutert gebildet. So stimmen in Fig. 8 die zu den Teilnehmern B, D, E und F gehörigen Eintragungen mit denen in der Belegungsmatrix von Fig. 6 überein. Auf Grund des zweiten "Hidden Node" Pärchens A, C weisen die dazugehörigen Zeitschlitze in den Zeilen eins und drei der Belegungsmatrix von Fig. 8 entsprechend der Erfindung erweiterte Einträge auf. So ist natürlich für den Teilnehmer A der Zeitschlitz C des Teilnehmers C gesperrt (siehe Eintrag "xx" in Zeile 1, Spalte 3), und umgekehrt für den Teilnehmer C der Zeitschlitz A des Teilnehmers A (siehe Eintrag "xx" in Zeile 3, Spalte 1). Weiterhin wurden die verbleibenden Zeitschlitze für die Teilnehmer A, C in der oben beschriebenen Weise aufgeteilt (siehe Einträge mit "x" in den Zeilen eins und drei der Belegungsmatrix von Fig. 8.

## Patentansprüche

1. Verfahren zur Zuordnung von Teilnehmern eines drahtlosen Datenbusnetzwerks zu den Zeitschlitzen in den Übertragungszyklen der Datentelegramme des Datenbusnetzwerks, wobei
- jedem Teilnehmer pro Übertragungszyklus zumindest ein Zeitschlitz zur ausschließlichen Nutzung zugeordnet ist, und dieser Zeitschlitz im Falle einer Nichtnutzung durch den Teilnehmer von einem anderen Teilnehmer zur Benutzung belegt werden kann, mit
- einer Belegungsmatrix, in der für jeden Teilnehmer verzeichnet ist, für welche Zeitschlitze von anderen Teilnehmern eine Belegung in einem Datentelegrammzyklus zugelassen ist, und wobei
- die Belegungsmatrix weiter so gebildet ist, dass darin für einen Teilnehmer zumindest die Belegung des Zeitschlitzes eines anderen Teilnehmers gesperrt ist, wenn es sich dabei um einen für diesen funktechnisch nicht erreichbaren anderen Teilnehmer ("Hidden Node") handelt.

2. Verfahren nach Anspruch 1, wobei in der Belegungsmatrix für Teilnehmer, welche untereinander funktechnisch nicht erreichbar sind ("Hidden Nodes"), die verbleibenden Zeitschlitze, welche nicht zur ausschließlichen Nutzung zugeordnet oder nicht gesperrt sind, eindeutig zwischen den Teilnehmern aufgeteilt sind.

3. Verfahren nach Anspruch 1 oder 2, wobei das drahtlose Datenbusnetzwerk einen zentralen Teilnehmer aufweist, z.B. ein Gateway, welcher für alle Teilnehmer des Datenbusnetzwerks funktechnisch erreichbar ist, und wobei zur Bildung der Belegungsmatrix
- in einem ersten Schritt der zentrale Teilnehmer einen ausgewählten Teilnehmer veranlasst, testweise ein Datentelegramm abzusenden,
- in einem zweiten Schritt der zentrale Teilnehmer alle übrigen Teilnehmer des Datenbusnetzwerks veranlasst, das testweise abgesendete Datentelegramm zu empfangen,
- in einem dritten Schritt ein wartender Teilnehmer dem zentralen Teilnehmer mitteilt, wenn dieser nach Ablauf einer Wartezeit das testweise abgesendete Datentelegramm nicht empfangen hat, und
- in einem vierten Schritt der zentrale Teilnehmer in der Belegungsmatrix für den ausgewählten und den wartenden Teilnehmer ("Hidden Nodes") eine Belegung von deren Zeitschlitze wechselseitig sperrt.

4. Verfahren nach Anspruch 3, wobei eine Belegungsmatrix vor Durchführung der Verfahrenschritte gemäß Anspruch 3 rückgesetzt wird.

5. Verfahren nach Anspruch 3 oder 4, wobei die Durchführung der Verfahrenschritte gemäß Anspruch 3 zyklisch wiederholt wird.

6. Verfahren nach einem der vorangegangenen Ansprüche, wobei das drahtlose Datenbusnetzwerk einen zentralen Teilnehmer aufweist, z.B. ein Gateway, welcher für alle Teilnehmer des Datenbusnetzwerks funktechnisch erreichbar ist, und wobei zur Bildung der Belegungsmatrix
- in einem ersten Schritt ein sendender Teilnehmer ein erstes Datentelegramm an den zentralen Teilnehmer in einem Zeitschlitz überträgt, welcher einem anderen Teilnehmer zur ausschließlichen Nutzung zugeordneten ist,
- in einem zweiten Schritt der sendende Teilnehmer den Ablauf einer Wartezeit zur Übertragung einer Bestätigung über den erfolgreichen Empfang des ersten Datentelegramms abwartet, und
- in einem dritten Schritt der sendende Teilnehmer dem zentralen Teilnehmer in einem zweiten Datentelegramm den für die Übertragung des ersten Datentelegramms vorgesehenen Zeitschlitz des anderen Teilnehmers mitteilt, wenn nach Ablauf der Wartezeit keine Bestätigung über den erfolgreichen Empfang des ersten Datentelegramms eingetroffen ist, und
- in einem vierten Schritt der zentrale Teilnehmer in der Belegungsmatrix für den sendenden und den anderen Teilnehmer ("Hidden Nodes") eine Belegung von deren Zeitschlitze wechselseitig sperrt.

7. Verfahren nach einem der vorangegangenen Ansprüche, wobei das drahtlose Datenbusnetzwerk unterschiedliche Betriebszustände annehmen kann, bei denen zumindest andere Gruppen von Teilnehmern und/oder Teilnehmer in einer veränderten räumlichen Anordnung aktiv sind, und wobei jedem Betriebszustand eine andere Belegungsmatrix zugeordnet ist.
